# EUROPEAN PATENT SPECIFICATION

(11) **EP 3 962 230 B1**
(45) Date of publication and mention of the grant of the patent: **28.08.2024**
(21) Application number: 19935904.3
(22) Date of filing: 04.07.2019
(51) Int. Cl.: H04W 74/0833, H04L 47/30, H04W 28/02, H04W 74/00

(54) **DATA TRANSMISSION METHOD AND APPARATUS, NETWORK DEVICE, AND TERMINAL**
VERFAHREN UND VORRICHTUNG ZUR DATENÜBERTRAGUNG SOWIE NETZWERKVORRICHTUNG UND ENDGERÄT
PROCÉDÉ ET APPAREIL DE TRANSMISSION DE DONNÉES, DISPOSITIF RÉSEAU ET TERMINAL

(43) Date of publication of application: 02.03.2022
(73) Proprietor: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); SHI, Cong, Dongguan, Guangdong 523860 (CN)
(74) Representative: Ipside
(86) International application number: PCT/CN2019/094714
(87) International publication number: WO 2021/000320

(56) References cited:
- EP-A1- 3 651 503
- WO-A1-2018/064367
- WO-A1-2019/031427
- WO-A1-2019/062926
- CN-A- 109 803 455
- CN-A- 109 863 783
- US-A1- 2017 196 022
- US-A1- 2019 045 554
- US-A1- 2019 141 776
- LG ELECTRONICS INC: "Contents in MAC layer of msgA and msgB", 29 March 2019 (2019-03-29), pages 1 - 4, XP051692994, Retrieved from the Internet <URL:http://www.3gpp.org/ftp/tsg%5Fran/WG2%5FRL2/TSGR2%5F105bis/Docs/R2%2D1903731%2Ezip>
- "R2-1713679", ON NB-IOT EDT INDICATION VIA PRACH, 20 November 2017 (2017-11-20), XP051372581, DOI: 20191224114939A
- "R1-1801686", EARLY DATA TRANSMISSION TBS DETERMINATION, 15 February 2018 (2018-02-15), XP051396815, DOI: 20191224114939A

## Description

### BACKGROUND

### Technical Field

The embodiments of the disclosure relate to the field of mobile communication technology, and in particular, to data transmission methods and a base station apparatus.

### Description of Related Art

In Long Term Evolution (LTE), early data transmission (EDT) is introduced, and EDT data transmission is also referred to as small data transmission, small data packet transmission, or packet data transmission. For uplink packet data transmission, currently, only one packet data transmission is supported, but there may be continuous multiple packet data transmissions in some scenarios. How to achieve continuous transmission of multiple packet data is an important issue.

Document WO 2019/031427 A1 discloses a communication control method in a mobile communication system, which includes: a step A in which a first wireless communication device transmits, to a second wireless communication device, information on whether to perform early data transmission for transmitting data by using a predetermined message in a random access procedure; and a step B in which, after receiving the information, the second wireless communication device determines whether to perform the early data transmission on the basis of the received information. The first wireless communication device is one of a wireless terminal and a base station, and the second wireless communication device is the other of the wireless terminal and the base station. The step A is performed prior to a transmission timing of the predetermined message.

Document US 2019/141776 A1 discloses a method and an apparatus for suspending/resuming NAS signaling in a wireless communication system. Specifically, a method for a user equipment (UE) to suspend/resume non-access stratum (NAS) signaling connection in a wireless communication system comprises: a step in which when a NAS layer of the UE receives, from a radio resource control (RRC) layer, an indication that RRC connection is suspended, the UE enters an evolved packet system (EPS) mobility management (EMM)-idle mode involving a suspension indication; and a step in which when a procedure using a first NAS message is triggered, the RRC layer of the UE is requested to resume the RRC connection, wherein the request comprises a cause of RC establishment and a call type, and when the UE is in a narrow band (NB)-S 1 mode, the request may further comprise data volume information of the first NAS message.

### SUMMARY

The invention is defined by the subject-matter of the independent claims. Preferred embodiments are set out in the dependent claims.

### BRIEF DESCRIPTION OF THE DRAWINGS

The drawings described herein are used to provide a further understanding of the disclosure, and constitute a part of the disclosure. The exemplary embodiments of the disclosure and the description thereof are used to explain the disclosure, and do not constitute an improper limitation of the disclosure. In the drawings:
FIG. 1 is a schematic view of a communication system architecture provided an embodiment of the disclosure.
FIG. 2A is a flow chart of an RNAU with context transfer provided by an embodiment of the disclosure.
FIG. 2B is a flow chart of an RNAU without context transfer provided by an embodiment of the disclosure.
FIG. 3 is a flow chart of transmitting EDT data on a user plane provided by an embodiment of the disclosure.
FIG. 4 is a schematic flow chart of a data transmission method provided by an embodiment of the disclosure.
FIG. 5A is a first schematic diagram of uplink data transmission provided by an embodiment of the disclosure.
FIG. 5B is a second schematic diagram of uplink data transmission provided by an embodiment of the disclosure.
FIG. 6 is a first schematic view of a structure forming a data transmission apparatus provided by an embodiment of the disclosure.
FIG. 7 is a second schematic view of a structure forming a data transmission apparatus provided by an embodiment of the disclosure.
FIG. 8 is a schematic view of a structure of a communication apparatus provided by an embodiment of the disclosure.
FIG. 9 is a schematic view of a structure of a chip provided by an embodiment of the disclosure.
FIG. 10 is a schematic block view of a communication system provided by an embodiment of the disclosure.

### DESCRIPTION OF THE EMBODIMENTS

The technical solution in the embodiments of the disclosure will be described below together with the drawings in the embodiments of the disclosure. Nevertheless, the described embodiments are part of the embodiments of the disclosure, not all the embodiments. Based on the embodiments of the disclosure, all other embodiments obtained by a person having ordinary skill in the art without making any inventive effort fall within the scope that the disclosure seeks to protect.

The technical solution provided by the embodiments of the disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, a universal mobile telecommunication system (UMTS), a worldwide interoperability for microwave access (WiMAX) communication system, or a 5G system and the like.

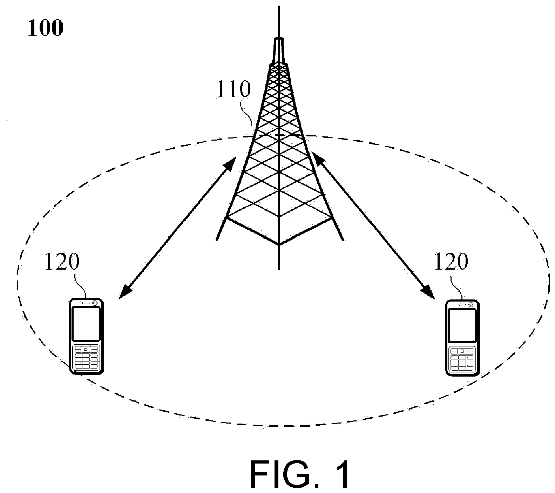

Exemplarily, a communication system 100 applied in the embodiments of the disclosure is shown in FIG. 1. The communication system 100 may include a network device 110, and the network device 110 may be an apparatus communicating with a terminal 120 (or referred to as a communication terminal or a terminal). The network device 110 may provide communication coverage for a specific geographic area and may communicate with a terminal located within the coverage area. Optionally, the network device 110 may be a base station (base transceiver station, BTS) in the GSM system or the CDMA system, may also be a base station (NodeB or NB) in the WCDMA system, and may further be an evolutional base station (evolutional node B, eNB or eNodeB) in the LTE system, or a wireless controller in a cloud radio access network (CRAN). Alternatively, the network device may be a network device in a mobile switching center, a repeater station, an access point, a vehicle-mounted device, a wearable device, a hub, a switch, a bridge, a router, a network side device in a 5G network, or a public land mobile network (PLMN) that evolves in the future, and so on.

The communication system 100 also includes at least one terminal 120 located within the coverage area of the network device 110. The "terminal" used herein includes, but not limited to, connection via a wired line (e.g., a public switched telephone network (PSTN), a digital subscriber line (DSL), a digital cable, or a direct cable), via another data connection/network, via a wireless interface (e.g., for a cellular network, a wireless local area network (WLAN), a digital television network such as a DVB-H network, a satellite network, or an AM-FM broadcast transmitter), via another terminal that is configured to receive/send a communication signal, and/or via an Internet of Things (IoT) apparatus. A terminal that is configured to communicate through a wireless interface may be referred to as a "wireless communication terminal", a "wireless terminal", or a "mobile terminal". Examples of the mobile terminal include, but not limited to, a satellite or cellular phone; a personal communication system (PCS) terminal that may combine a cellular radio phone with data processing, facsimileing, and data communication capabilities, may include a radio phone, a pager, Internet/Intranet access, a web browser, a notepad, a calendar, and/or a personal digital assistant (PDA) of a global positioning system (GPS) receiver, may include a conventional laptop and/or a handheld receiver, or may include other electronic devices including a radio telephone transceiver. The terminal may refer to an access terminal, user equipment (UE), a user unit, a user station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a PDA, a handheld device with wireless communication capabilities, a computing device or other processing devices connected to a wireless modem, a vehicle-mounted device, a wearable device, a terminal in a 5G network, or a terminal in a PLMN that may evolve in the future.

Optionally, device to device (D2D) communication may be performed between terminals 120.

Optionally, the 5G system or 5G network may also be referred to as a new radio (NR) system or NR network.

One network device and two terminals are exemplarily depicted in FIG. 1. Optionally, the communication system 100 may include a plurality of network devices, and the coverage area of each of the network devices may include terminals of other numbers, which is not limited in the embodiments of the disclosure.

Optionally, the communication system 100 may also include other network entities such as a network controller, a mobility management entity, etc., which is not limited in the embodiments of the disclosure.

It should be understood that an apparatus with a communication function in the network/system in the embodiments of the disclosure may be referred to as a communication apparatus. Taking the communication system 100 shown in FIG. 1 as an example, the communication apparatus may include the network device 110 and the terminals 120 having the communication function. The network device 110 and the terminals 120 may be the specific apparatuses described above, and description thereof is thus not repeated herein. The communication apparatus may further include other apparatuses in the communication system 100, such as other network entities including a network controller, a mobility management entity, etc., which is not limited in the embodiments of the disclosure.

It should be understood that the terms "system" and "network" in the specification are often used interchangeably in the specification. The term "and/or" in the specification is only an association relationship describing the associated objects, and it means that there may be three types of relationships. For instance, A and/or B may mean that: A exists alone, A and B exist at the same time, and B exists alone. Further, the character "/" in the specification generally indicates that the associated objects before and after are in an "or" relationship.

In order to facilitate the understanding of the technical solution of the embodiments of the disclosure, the technical solution related to the embodiments of the disclosure is described below.

### Three radio resource control (RRC) States

In the 5G network environment, in order to reduce air interface signaling, quickly resume wireless connection, and quickly resume data services, a new RRC state, that is, the RRC inactive (RRC_INACTIVE) state, is defined. This state is different from the RRC idle (RRC_IDLE) state and the RRC connected (RRC_CONNECTED) state.

The three RRC states in the 5G network environment are described as follows.
1) RRC_IDLE state (hereinafter referred to as idle state): Mobility is UE-based cell selection and reselection, paging is initiated by the core network (CN), and the paging area is configured by the CN. UE access stratum (AS) context is not provided on the base station side. An RRC connection is not provided.
2) RRC_CONNECTED state (hereinafter referred to as connected state): An RRC connection is provided, and UE AS context is provided between the base station and the UE. The network side knows that the location of the UE is of a specific cell level. Mobility is the mobility controlled by the network side. Unicast data may be transmitted between the UE and the base station.
3) RRC_INACTIVE state (hereinafter referred to as inactive state): Mobility is UE-based cell selection and reselection, a connection between CN and RAN is provided, the UE AS context is stored on a specific base station, paging is triggered by the RAN, the RAN-based paging area is managed by the RAN, and the network side knows that the location of the UE is based on the paging area level of the RAN.

When the UE is in the inactive state, the following conditions trigger the UE to return to the idle state: 1) When the CN initial paging message is received; 2) When the RRC resume request is initiated, the timer T319 is started, if the timer expires; 3) MSG4 integrity protection verification fails; 4) When the cell is reselected to another radio access technology (RAT); 5) It enters the state of camping on any cell.
radio access network (RAN) Notification Area (RNA)
When the UE is in the inactive state, the network side may configure the inactive state configuration parameters for the UE through RRC dedicated signaling (e.g., RRC release message), and the main configuration parameters include: 1) Inactive radio network temporary identification (I- RNTI), the I-RNTI is used to identify the UE inactive state context of the UE on the base station side, and the I-RNTI is unique within the base station. 2) RNA, RNA is used to control the area where the UE performs cell selection and reselection in the inactive state, and it is also the paging range area for the initial paging of the RAN. 3) RAN discontinuous reception cycle (RAN DRX cycle), the RAN DRX cycle is used to calculate the paging occasion of the RAN initial paging. 4) RAN notification area update period (RNA update periodicity, RNAU periodicity), RNAU periodicity is configured to control the period of the UE to perform periodic RAN location update. 5) Next hop chaining counter (NCC), NCC is used for the secret key used in the process of RRC connection resuming.

When the UE moves in the RNA area, it does not need to notify the network side and follows the mobility behavior in the idle state, that is, the principle of cell selection and reselection. When the UE moves out of the paging area configured by the RAN, the UE may be triggered to resume the RRC connection and reacquire the paging area configured by the RAN. When the UE has downlink data arriving, the base station that maintains the connection between the RAN and the CN for the UE may trigger all cells in the RAN paging area to send paging messages to the UE, so that the inactive UE may resume the RRC connection and receive data. On the other hand, the UE in the inactive state is configured with a RAN paging area, and in order to ensure the reachability of the UE in this area, the UE needs to perform periodic location updates according to the network configured period (based on the RNAU timer). Therefore, the scenarios that trigger the UE to execute RNAU include the timeout of the RNAU timer or the UE moving to an area outside the RNA.

When the target base station where the UE initiates the RRC connection resume process is not an anchor base station, the anchor base station determines whether to transfer the context of the UE to the target base station side. Therefore, in general, the target base station may carry the cause value carried in the UE initiated RRC connection resume request message in the retrieve UE context message and sends it to the anchor base station, and the anchor base station determines whether to transfer the context of the UE to the target base station side. The following describes the context transfer of the UE in combination with the RNAU process.

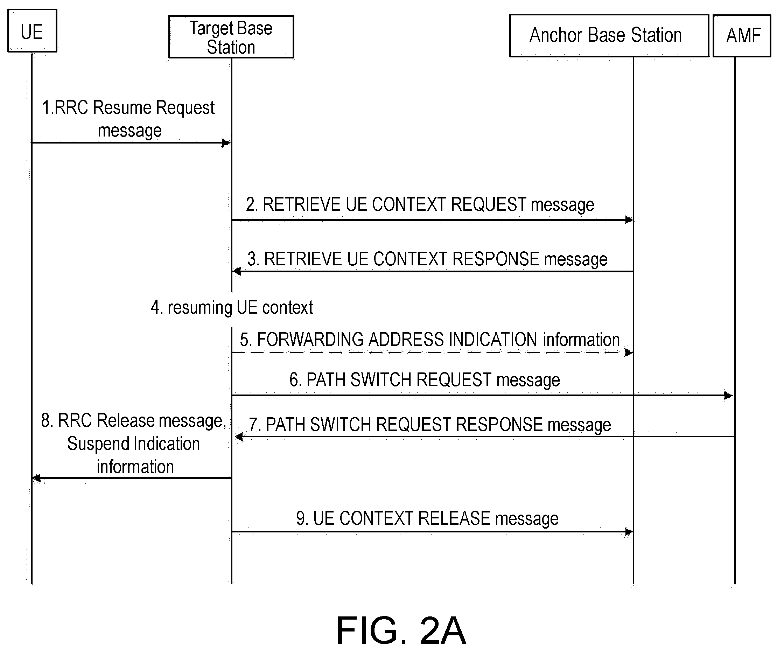

FIG. 2A is a flow chart of RNAU with context transfer, and the following steps are included.
1. The UE sends an RRC Resume Request message to the target base station.
   Herein, the RRC Resume Request message carries the cause value for RRC resuming, that is, RNAU.
2. The target base station sends a RETRIEVE UE CONTEXT REQUEST message to the anchor base station.
   Herein, the RETRIEVE UE CONTEXT REQUEST message carries information: RNAU.
3. The anchor base station sends a RETRIEVE UE CONTEXT RESPONSE message to the target base station.
4. The target base station resumes the UE context.
5. The target base station sends DATA FORWARDING ADDRESS INDICATION information to the anchor base station.
6. The target base station sends a PATH SWITCH REQUEST message to the access and mobility management function (AMF) entity.
7. The AMF sends a PATH SWITCH REQUEST RESPONSE message to the target base station.
8. The target base station sends an RRC Release message to the UE, and the RRC Release message carries Suspend Indication information.
9. The target base station sends a UE CONTEXT RELEASE message to the anchor base station.

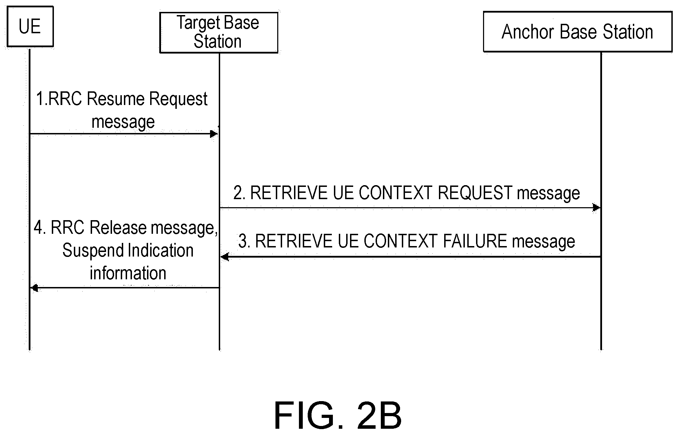

FIG. 2B is a flow chart of RNAU without context transfer, and the following steps are included.
1. The UE sends an RRC Resume Request message to the target base station.
   Herein, the RRC Resume Request message carries the cause value for RRC resuming, that is, RNAU.
2. The target base station sends a RETRIEVE UE CONTEXT REQUEST message to the anchor base station.
   Herein, the RETRIEVE UE CONTEXT REQUEST message carries information: RNAU.
3. The anchor base station sends a RETRIEVE UE CONTEXT FAILURE message to the target base station.
4. The target base station sends an RRC Release message to the UE, and the RRC Release message carries Suspend Indication information.

Note that the anchor base station in FIG 2A and FIG 2B refers to the base station that stores the UE context. In an example, the anchor base station is the base station that serves the UE last time.

### EDT Data Transmission

EDT data transmission is introduced in LTE, and during the EDT data transmission process, the UE may always remain in an idle state or a suspend state or an inactive state to complete uplink and/or downlink EDT data transmission.

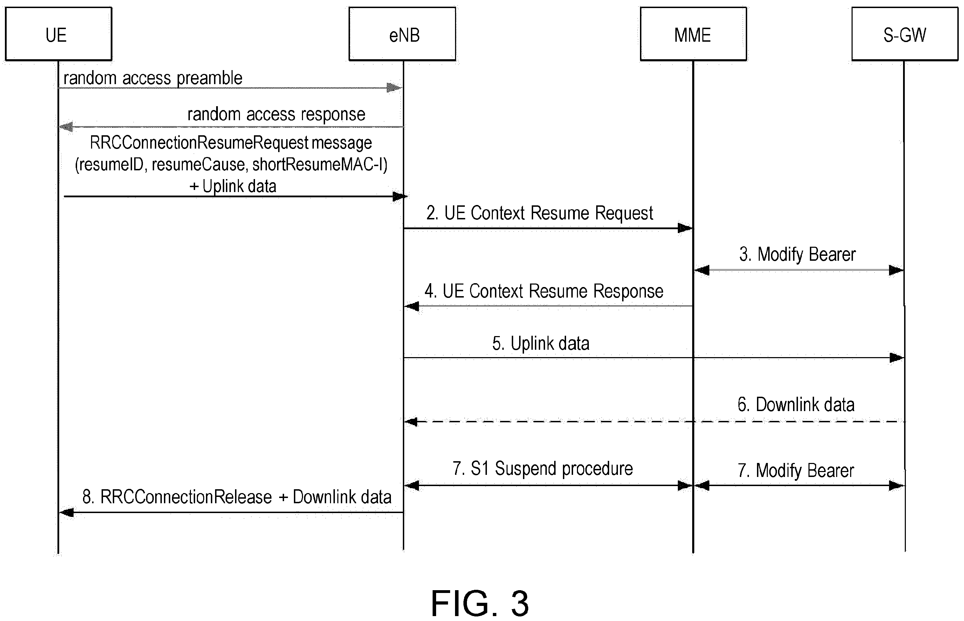

The user plane transmission scheme may be adopted by EDT data transmission, and as shown in FIG. 3, the following steps are included.
1. The UE sends an RRCConnectionResumeRequest message and Uplink data to the eNB.
   Herein, the RRCConnectionResumeRequest carries the following information: resumeID, resumeCause, and shortResumeMAC-I.
2. The eNB sends a UE Context Resume Request message to the MME.
3. Bearer modifying is performed between the MME and S-GW.
4. The MME sends a UE Context Resume Response message to the eNB.
5. The eNB sends Uplink data to the S-GW.
6. The S-GW sends Downlink data to the eNB.
7. Bearer modifying is performed between the MME and S-GW, and the S1 Suspend procedure is executed between the NB and MME.
8. The eNB sends an RRCConnectionRelease message and the Downlink data to the UE.

Herein, the RRCConnectionRelease message carries the following information: releaseCause, releaseID, and NCC.

Note that in FIG. 3, LTE is taken as an example for illustration. NR is the same as LTE, and the difference therebetween is that for NR, eNB needs to be replaced with gNB, the mobility management entity (MME) needs to be replaced with AMF, and the serving gateway (S-GW) needs to be replaced with the user plane function (UPF) entity.

In FIG. 3, the RRC connection resume request message is carried in the MSG3 of the random access process, and the uplink data belongs to user plane data. Herein, the uplink data is transmitted in a dedicated transmission channel (DTCH), the RRC connection resume request message is transmitted in a common control channel (CCCH), and a medium access control (MAC) service data unit (SDU) (i.e., DTCH SDU) corresponding to the uplink data and a MAC SDU (i.e., CCCH SDU) corresponding to the RRC connection resume request message are multiplexed in a same MAC protocol data unit (PDU) at a MAC layer. The downlink is the same as the uplink, the downlink data is transmitted in the DTCH, the RRC connection release message is transmitted in the CCCH, the MAC SDU (i.e., DTCH SDU) corresponding to the downlink data and the MAC SDU (i.e., CCCH SDU) corresponding to the RRC connection release message are multiplexed in the same MAC PDU at the MAC layer. What is needed is that the uplink data or the downlink data in FIG. 3 may be packet data. Herein, the packet data is also referred to as small data, small data packet, or EDT data.

For the transmission of the uplink packet data, only one packet data transmission is currently supported. However, in some scenarios, there may be several consecutive packet data transmissions. At this time, the terminal may only enter the connected state, and then after data is transmitted through the dedicated bearer, the terminal enters the idle state or the inactive state again, which increases signaling overhead and UE power consumption. To this end, the following technical solution is provided by the embodiments of the disclosure. The technical solution provided by the embodiments of the disclosure provides a new transmission method of packet data through which continuous transmission of a plurality of packet data is supported, the scenario of packet data transmission is expanded, EDT is widely applied, and signaling overhead and UE power consumption are further reduced.

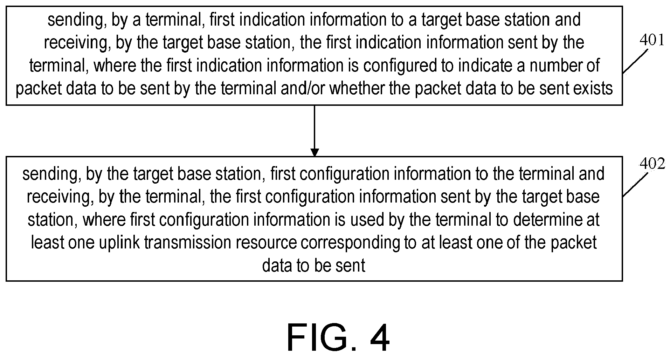

FIG. 4 is a schematic flow chart of a data transmission method according to the claimed invention. As shown in FIG. 4, the data transmission method includes the following steps.

In step 401, a terminal sends first indication information to a target base station, and the target base station receives the first indication information sent by the terminal. The first indication information is configured to indicate a number of packet data to be sent by the terminal and/or whether the packet data to be sent exists.

In the embodiments of the disclosure, the terminal may be any apparatus capable of communicating with the network, such as a mobile phone, a tablet computer, a notebook, a vehicle-mounted terminal, and a wearable apparatus. In an optional embodiment, the terminal is a terminal in an inactive state.

In the embodiments of the disclosure, when the terminal is in an inactive state, N (N is a positive integer) pieces of packet data are required to be sent, and the terminal initiates a random access process. Specifically, the terminal sends an RRC resume request message to the target base station. During the random access process or after the random access process, the terminal sends the first indication information to the target base station. Through the first indication information, the target base station receives the indication of the number of the packet data to be sent by the terminal (that is, how many pieces of the packet data that the terminal has to send), and/or whether the packet data to be sent exists(that is, whether there is any subsequently packet data to be sent).

It should be noted that the random access process initiated by the terminal may be a contention-based 2-step random access process (hereinafter referred to as the 2-step random access process), or a contention-based 4-step random access process (hereinafter referred to as the 4 step random access process).

Herein, the 4-step random access includes the following steps: (1) The UE sends MSG1 to the base station. (2) The base station sends MSG2 to the UE. (3) The UE sends MSG3 to the base station. (4) The base station sends MSG4 to the UE. By combining the MSG1 and MSG3 in the 4-step random access process, the MSGA in the 2-step random access process may be obtained, and by combining the MSG2 and MSG4 in the 4-step random access process, the MSGB in the 2-step random access process may be obtained. It thus can be seen that the 2-step random access includes the following steps: (1) The UE sends MSGA to the base station. (2) The base station sends MSGB to the UE.

According to the claimed invention, the implementation of the first indication information is achieved by adopting the following method one or a combination of method one with any multiple methods.

Method one: The terminal sends a first preamble to the target base station on a first physical random access channel (PRACH) resource. The target base station receives the first preamble sent by the terminal on the first PRACH resource. The first PRACH resource and/or the first preamble have/has an association relationship with the number of the packet data to be sent by the terminal. The target base station determines the number of the packet data to be sent by the terminal according to the first PRACH resource and/or the first preamble.

Here, the association relationship is configured through second configuration information. To be specific, the target base station sends the second configuration information to the terminal, and the terminal receives the second configuration information sent by the target base station. The second configuration information is used by the terminal to determine the association relationship between the number of the packet data to be sent and the first PRACH resource and/or the first preamble. Based on the above, the terminal determines (or selects) the first PRACH resource and/or the first preamble based on the second configuration information and the number of the packet data to be sent.

The second configuration information is configured through a system broadcasting message or dedicated signaling.

Method two: The terminal sends a first message to the target base station, and the target base station receives the first message sent by the terminal. The first message carries the first indication information. The first message is the MSG3 in the 4-step random access process, or the first message is the MSGA in the 2-step random access process.

Herein, if it is a 2-step random access process, the first indication information is carried in a payload in the MSGA.

Method three: The terminal sends uplink data or uplink signaling to the target base station, and the target base station receives the uplink data or the uplink signaling sent by the terminal. The MAC SDU corresponding to the uplink data or the uplink signaling is multiplexed with a first MAC control element (CE) in the same MAC PDU, and the first MAC CE carries the first indication information.

Herein, the first MAC CE is a newly defined uplink MAC CE, and the uplink MAC CE carries the first indication information.

Method four: The terminal sends uplink data or uplink signaling to the target base station, and the target base station receives the uplink data or the uplink signaling sent by the terminal. The MAC SDU corresponding to the uplink data or the uplink signaling is multiplexed with a second MAC CE in the same MAC PDU, and the second MAC CE carries a buffer status report (BSR). The BSR indicates that the packet data to be sent exists and/or the number of the packet data to be sent.

Herein, the second MAC CE is an existing MAC CE called a BSR MAC CE, and the BSR in the BSR MAC CE indicates that the packet data to be sent exitst and/or the number of the packet data to be sent.

Method five: The terminal sends a first data packet to the target base station, and the target base station receives the first data packet sent by the terminal. A packet header of the first data packet carries the first indication information. Further, the packet header is a packet data convergence protocol (PDCP) packet header or an radio link control (RLC) packet header.

Method six: The terminal sends a control PDU to the target base station, and the target base station receives the control PDU sent by the terminal. The control PDU carries the first indication information. Further, the control PDU is a PDCP control PDU or an RLC control PDU.

In the embodiments of the disclosure, the target base station receives an RRC resume request message sent by the terminal. The target base station obtains a first terminal identifier (e.g., I-RNTI) from the RRC resume request message, addresses an anchor base station according to the first terminal identifier, and sends a retrieve terminal context request message to the anchor base station. Herein, if the anchor base station determines to send the context of the terminal to the target base station, the target base station resumes the context of the terminal, and if the anchor base station determines not to send the context of the terminal to the target base station, the anchor base station resumes the context of the terminal. Herein, the RRC resume request message is carried in the MSG3 of the 4-step random access process, or the RRC resume request message is carried in the MSGA of the 2-step random access process.

For instance: 1) After receiving the RRC resume request message, the target base station decodes the message and obtains the identifier of the UE (i.e., I-RNTI). The target base station addresses the anchor base station according to the I-RNTI, and sends a RETRIEVE UE CONTEXT REQUEST message to the anchor base station. 2) The anchor base station determines whether to relocate the UE context, and if it determines to relocate the UE context, the anchor base station replies to the RETRIEVE UE CONTEXT RESPONSE message sent by the target base station and transfers the UE context to the target base station. If it is determined not to relocate the UE context, the anchor base station replies to the target base station with a RETRIEVE UE CONTEXT FAILURE message. 3) If the UE context is relocated, the target base station resumes the UE context (such as resuming security, resuming a data radio bearer (DRB) configuration, resuming an Signaling Radio Bearer (SRB) configuration, etc.) after receiving the UE context sent by the anchor base station. If the UE context is not relocated, the anchor base station resumes the UE context (such as resuming security, resuming the DRB configuration, resuming the SRB configuration, etc.).

In step 402, the target base station sends first configuration information to the terminal, and the terminal receives the first configuration information sent by the target base station. The first configuration information is used by the terminal to determine at least one uplink transmission resource corresponding to at least one of the packet data to be sent.

In the embodiments of the disclosure, implementation of the first configuration information may be achieved by adopting any one of the following methods.

Method I) The target base station sends a static configuration instruction to the terminal, and the terminal receives the static configuration instruction sent by the target base station. The static configuration instruction carries the first configuration information. Further, the static configuration instruction is an RRC message, the RRC message is the MSG4 in the 4-step random access process, or the RRC message is the MSGB in the 2-step random access process.

For method I), the target base station uses a pre-configuration method to configure one or more uplink transmission resources (i.e., uplink grant) for the terminal.

Method II) The target base station sends a dynamic scheduling instruction to the terminal, and the terminal receives the dynamic scheduling instruction sent by the target base station. The dynamic scheduling instruction carries the first configuration information. Further, the dynamic scheduling instruction is downlink control information (DCI).

For method II, the target base station uses a dynamic scheduling method to schedule one or more UL grants for the terminal.

Note that method I) and method II) in step 402 may be implemented in any combination with method one to method six in step 401. For example, in the case where the first indication information is implemented by method one or by method two, the UL grant may be scheduled by adopting method I) or method II). To give another example, in the case where the first indication information is implemented by method three, by method four, by method five, or by method six, the UL grant may be scheduled by adopting method II).

In the embodiments of the disclosure, the uplink transmission resource (i.e., UL grant) refers to a physical uplink shared channel (PUSCH) resource. The target base station may configure a corresponding relationship between a preamble and the PUSCH, and the corresponding relationship may be one preamble corresponding to one or more PUSCHs. In this way, if there are multiple pieces of the packet data to be sent by the terminal, multiple PUSCH resources may be selected to send the packet data.

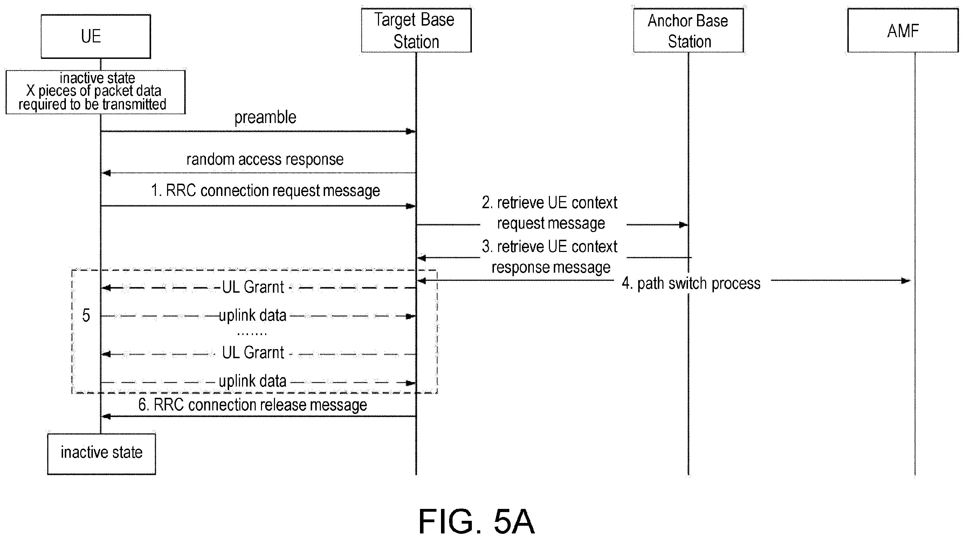

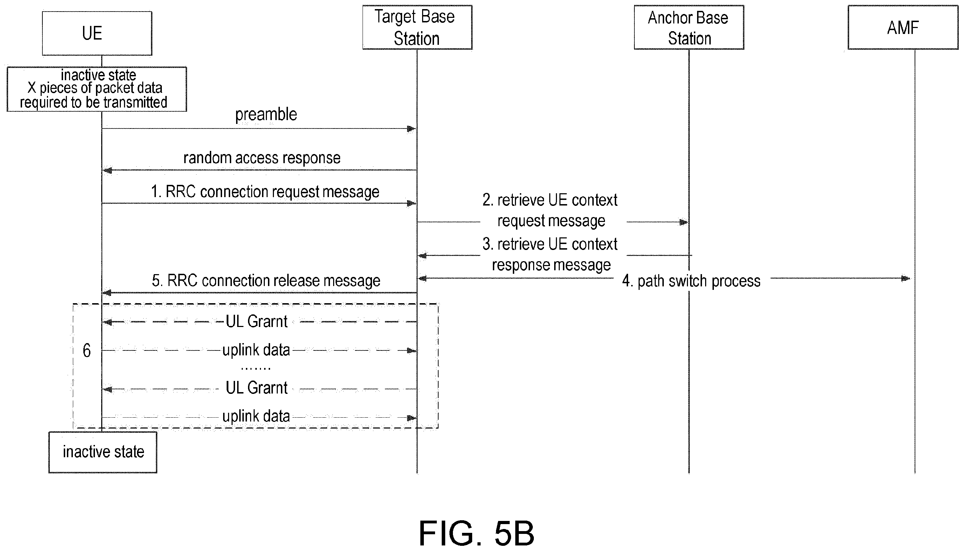

Note that the terminal in the embodiments of the disclosure is in an inactive state when sending the packet data, that is, the UL grant scheduled by the target base station is used by the terminal in the inactive state to send the packet data. The UL grant and packet data transmission are described as follows in combination with FIG. 5A and FIG. 5B.

With reference to FIG. 5A, the following process flow is included. 1. When the UE is in an inactive state, there are X pieces of the packet data to be sent, and an RRC resume request message is sent to the target base station. 2. The target base station sends a retrieve UE context request message to the anchor base station. 3. The anchor base station determines to relocate the UE context and replies to the target base station with a retrieve UE context response message. 4. The target base station resumes the UE context and initiates a path conversion process to the AMF. 5. The target base station sends a UL grant to the UE, and the UE sends uplink data based on the UL grant. Herein, the uplink data refers to packet data. The target base station may send the UL grant to the UE multiple times, so that the UE may continuously send multiple uplink data. 6. The target base station sends an RRC connection release message to the UE.

With reference to FIG. 5B, the following process flow is included. 1. When the UE is in an inactive state, there are X pieces of the packet data to be sent, and an RRC resume request message is sent to the target base station. 2. The target base station sends a retrieve UE context request message to the anchor base station. 3. The anchor base station determines to relocate the UE context and replies to the target base station with a retrieve UE context response message. 4. The target base station resumes the UE context and initiates a path conversion process to the AMF. 5. The target base station sends an RRC connection release message to the UE. 6. The target base station sends a UL grant to the UE, and the UE sends uplink data based on the UL grant. Herein, the uplink data refers to packet data. The target base station may send the UL grant to the UE multiple times, so that the UE may continuously send multiple uplink data.

Note that in the process flows shown in FIG. 5A and FIG. 5B, the target base station dynamically schedules the UL grant to the terminal multiple times. The embodiments of the disclosure are not limited thereto, and the target base station may also schedule multiple UL grants to the terminal at a time, that is, the target base station configures one or more UL grants for the terminal at a time in a pre-configuration manner.

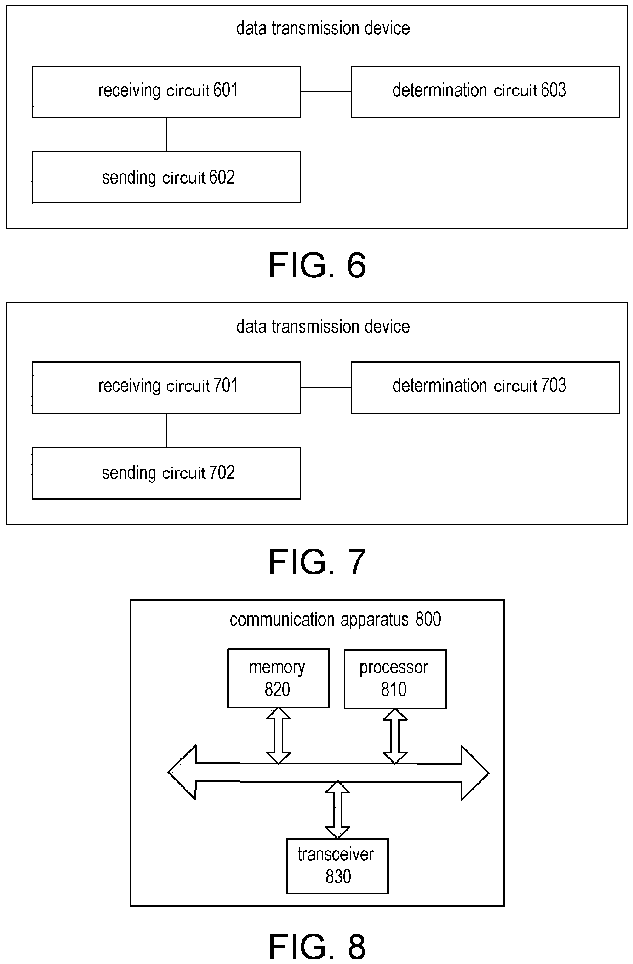

FIG. 6 is a first schematic view of a structure forming a data transmission apparatus according to the claimed invention, and as shown in FIG. 6, the data transmission apparatus includes a receiving circuit 601 and a sending circuit 602.

The receiving circuit 601 is configured to receive first indication information sent by a terminal. The first indication information is configured to indicate a number of the packet data to be sent by the terminal and/or whether the packet data to be sent exists.

The sending circuit 602 is configured to send first configuration information to the terminal. The first configuration information is used by the terminal to determine at least one uplink transmission resource corresponding to at least one of the packet data to be sent.

The receiving circuit 601 is configured to receive a first preamble sent by the terminal on a first PRACH resource, and the first PRACH resource and/or the first preamble have/has an association relationship with the number of the packet data to be sent by the terminal.

The device further includes a determination circuit 603 configured to determine the number of the packet data to be sent by the terminal according to the first PRACH resource and/or the first preamble.

The sending circuit 602 is configured to send second configuration information to the terminal, and the second configuration information is used by the terminal to determine the association relationship between the number of the packet data to be sent and the first PRACH resource and/or the first preamble.

The second configuration information is configured through a system broadcasting message or dedicated signaling.

In an embodiment, the receiving circuit 601 is configured to receive a first message sent by the terminal, and the first message carries the first indication information.

In an embodiment, the first message is the MSG3 in the 4-step random access process, or the first message is the MSGA in the 2-step random access process.

In an embodiment, the receiving circuit 601 is configured to receive uplink data or uplink signaling sent by the terminal, and a MAC SDU corresponding to the uplink data or the uplink signaling is multiplexed with a first MAC CE in a same MAC PDU, and the first MAC CE carries the first indication information.

In an embodiment, the receiving circuit 601 is configured to receive uplink data or uplink signaling sent by the terminal, a MAC SDU corresponding to the uplink data or the uplink signaling is multiplexed with a second MAC CE in a same MAC PDU, and the second MAC CE carries a BSR, and The BSR indicates that the packet data to be sent exits and/or the number of the packet data to be sent.

In an embodiment, the receiving circuit 601 is configured to receive a first data packet sent by the terminal, and a packet header of the first data packet carries the first indication information.

In an embodiment, the packet header is a PDCP packet header or an RLC packet header.

In an embodiment, the receiving circuit 601 is configured to receive a control PDU sent by the terminal, and the control PDU carries the first indication information.

In an embodiment, the control PDU is a PDCP control PDU or an RLC control PDU.

In an embodiment, the sending circuit 602 is configured to send a static configuration instruction to the terminal, and the static configuration instruction carries the first configuration information.

In an embodiment, the static configuration instruction is an RRC message, the RRC message is the MSG4 in the 4-step random access process, or the RRC message is the MSGB in the 2-step random access process.

In an embodiment, the sending circuit 602 is configured to send a dynamic scheduling instruction to the terminal, and the dynamic scheduling instruction carries the first configuration information.

In an embodiment, the dynamic scheduling instruction is DCI.

In an embodiment, the receiving circuit 601 is configured to receive an RRC resume request message sent by the terminal.

The receiving circuit 601 is configured to obtain a first terminal identifier from the RRC resume request message, address an anchor base station according to the first terminal identifier, and send a retrieve terminal context request message to the anchor base station.

Herein, if the anchor base station determines to send the context of the terminal to a target base station, the target base station resumes the context of the terminal, and if the anchor base station determines not to send the context of the terminal to the target base station, the anchor base station resumes the context of the terminal.

In an embodiment, the RRC resume request message is carried in the MSG3 of the 4-step random access process, or the RRC resume request message is carried in the MSGA of the 2-step random access process.

A person having ordinary skill in the art should understand that the relevant description of the foregoing data transmission apparatus in the embodiments of the disclosure may be understood with reference to the relevant description of the data transmission method in the embodiments of the disclosure.

FIG. 7 is a second schematic view of a structure forming a data transmission apparatus provided by an embodiment of the disclosure, and as shown in FIG. 7, the data transmission apparatus includes a receiving circuit 701 and a sending circuit 702.

The sending circuit 701 is configured to send first indication information to a target base station. The first indication information is configured to indicate a number of the packet data to be sent by the terminal and/or whether the packet data to be sent exists.

The receiving circuit 602 is configured to receive first configuration information sent by the target base station. The first configuration information is used by the terminal to determine at least one uplink transmission resource corresponding to at least one packet data to be sent.

In an embodiment, the sending circuit 701 is configured to send a first preamble to the target base station on a first PRACH resource, and the first PRACH resource and/or the first preamble have/has an association relationship with the number of the packet data to be sent by the terminal.

In an embodiment, the receiving circuit 702 is configured to receive second configuration information sent by the target base station, and the second configuration information is used by the terminal to determine the association relationship between the number of the packet data to be sent and the first PRACH resource and/or the first preamble.

The device further includes a determination circuit 703 configured to determine the first PRACH resource and/or the first preamble based on the second configuration information and the number of the packet data to be sent.

In an embodiment, the second configuration information is configured through a system broadcasting message or dedicated signaling.

In an embodiment, the sending circuit 701 is configured to send a first message to the target base station, and the first message carries the first indication information.

In an embodiment, the first message is the MSG3 in the 4-step random access process, or the first message is the MSGA in the 2-step random access process.

In an embodiment, the sending circuit 701 is configured to send uplink data or uplink signaling to the target base station, a MAC SDU corresponding to the uplink data or the uplink signaling is multiplexed with a first MAC CE in a same MAC PDU, and the first MAC CE carries the first indication information.

In an embodiment, the sending circuit 701 is configured to send uplink data or uplink signaling to the target base station, a MAC SDU corresponding to the uplink data or the uplink signaling is multiplexed with a second MAC CE in a same MAC PDU, and the second MAC CE carries a BSR, and the BSR indicates that the packet data to be sent exists and/or the number of the packet data to be sent.

In an embodiment, the sending circuit 701 is configured to send a first data packet to the target base station, and a packet header of the first data packet carries the first indication information.

In an embodiment, the packet header is a PDCP packet header or an RLC packet header.

In an embodiment, the sending circuit 701 is configured to send a control PDU to the target base station, and the control PDU carries the first indication information.

In an embodiment, the control PDU is a PDCP control PDU or an RLC control PDU.

In an embodiment, the receiving circuit 702 is configured to receive a static configuration instruction sent by the target base station, and the static configuration instruction carries the first configuration information.

In an embodiment, the static configuration instruction is an RRC message, the RRC message is the MSG4 in the 4-step random access process, or the RRC message is the MSGB in the 2-step random access process.

In an embodiment, the receiving circuit 702 is configured to receive a dynamic scheduling instruction sent by the target base station, and the dynamic scheduling instruction carries the first configuration information.

In an embodiment, the dynamic scheduling instruction is DCI.

A person having ordinary skill in the art should understand that the relevant description of the foregoing data transmission apparatus in the embodiments of the disclosure may be understood with reference to the relevant description of the data transmission method in the embodiments of the disclosure.

FIG. 8 is a schematic view of a structure of a communication apparatus 800 provided by an embodiment of the disclosure. The communication apparatus may be a terminal or a network device (e.g., a base station). The communication apparatus 800 shown in FIG. 8 includes a processor 810, and the processor 810 may call and run a computer program from a memory to implement the method in the embodiments of the disclosure.

Optionally, as shown in FIG. 8, the communication apparatus 800 may further include a memory 820. The processor 810 may call and run a computer program from the memory 820 to implement the method in the embodiments of the disclosure.

The memory 820 may be a separate device independent of the processor 810 or may be integrated in the processor 810.

Optionally, as shown in FIG. 8, the communication apparatus 800 may further include a transceiver 830, and the processor 810 may control the transceiver 830 to communicate with other apparatuses. Specifically, it can send information or data to other apparatuses, or receive information or data sent by other apparatuses.

The transceiver 830 may include a transmitter and a receiver. The transceiver 830 may further include an antenna, and a number of antennas may be one or more.

Optionally, the communication apparatus 800 may specifically be a network device in the embodiments of the disclosure, and the communication apparatus 800 may implement the corresponding process flows implemented by the network device in the various methods in the embodiments of the disclosure. For the sake of brevity, description thereof is not repeated herein.

Optionally, the communication apparatus 800 may specifically be a mobile terminal/terminal in the embodiments of the disclosure, and the communication apparatus 800 may implement the corresponding process flows implemented by the mobile terminal/terminal in the various methods in the embodiments of the disclosure. For the sake of brevity, description thereof is not repeated herein.

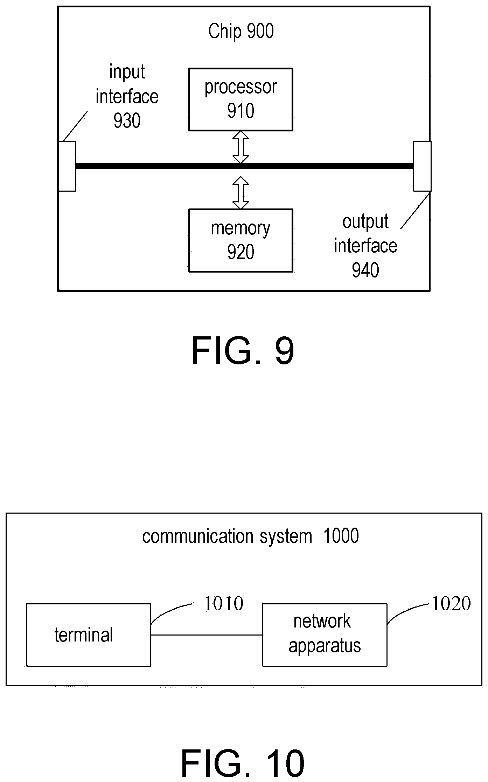

FIG. 9 is a schematic view of a structure of a chip provided by an embodiment of the disclosure. A chip 900 shown in FIG. 9 includes a processor 910, and the processor 910 may call and run a computer program from a memory to implement the method in the embodiments of the disclosure.

Optionally, as shown in FIG. 9, the chip 900 may further include a memory 920. The processor 910 may call and run a computer program from the memory 920 to implement the method in the embodiments of the disclosure.

The memory 920 may be a separate device independent of the processor 910 or may be integrated in the processor 910.

Optionally, the chip 900 may further include an input interface 930. The processor 910 may control the input interface 930 to communicate with other apparatuses or chips, and specifically, may obtain information or data sent by other apparatuses or chips.

Optionally, the chip 900 may further include an output interface 940. The processor 910 may control the output interface 940 to communicate with other apparatuses or chips, and specifically, may output information or data to other apparatuses or chips.

Optionally, the chip may be applied to the network device in the embodiments of the disclosure, and the chip may implement the corresponding process flows implemented by the network device in the various methods in the embodiments of the disclosure. For the sake of brevity, description thereof is not repeated herein.

Optionally, the chip may be applied to the mobile terminal/terminal in the embodiments of the disclosure, and the chip may implement the corresponding process flows implemented by the mobile terminal/terminal in the various methods in the embodiments of the disclosure. For the sake of brevity, description thereof is not repeated herein.

It should be understood that the chip mentioned in the embodiments of the disclosure may also be referred to as a system-level chip or a system on a chip.

FIG. 10 is a schematic block view of a communication system 1000 provided by an embodiment of the disclosure. As shown in FIG. 10, the communication system 1000 includes a terminal 1010 and a network device 1020.

The terminal 1010 may be used to implement the corresponding functions implemented by the terminal in the foregoing method, and the network device 1020 may be used to implement the corresponding functions implemented by the network device in the foregoing method. For the sake of brevity, description thereof is not repeated herein.

It should be understood that the processor of the embodiments of the disclosure may be an integrated circuit chip with signal processing capability. In the implementation process, the steps of the foregoing method in the embodiments may be completed by an integrated logic circuit of hardware or an instruction in the form of software in the processor. The processor may be a general-purpose processor, a digital signal processor (DSP), an application specific integrated circuit (ASIC), a field programmable gate array (FPGA), or other components such as a programmable logic device, a discrete gate, a transistor logic device, and a discrete hardware component. The processor may implement or execute various methods, steps, and logical block diagrams disclosed in the embodiments of the disclosure. The general-purpose processor may be a microprocessor, or the processor may be any conventional processor and the like. The steps of the method disclosed in the embodiments of the disclosure may be directly implemented as being executed and completed by a hardware decoding processor, or may be executed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads the information in the memory and completes the steps of the foregoing method in combination with its hardware.

It may be understood that the memory in the embodiments of the disclosure may be a volatile memory or a non-volatile memory or may include both the volatile memory and the non-volatile memory. The non-volatile memory may be a ready-only memory (ROM), a programmable ROM (PROM), an erasable PROM (EPROM), an electrically EPROM (EEPROM), or a flash memory. The volatile memory may be a random access memory (RAM) used as an external cache. By way of exemplary but not restrictive description, many forms of the RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DRRAM). It should be noted that the memory of the system and the method described herein is intended to include, but not limited to, these and any other suitable types of memories.

It should be understood that the above-mentioned memory is exemplary but not restrictive. For instance, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DRRAM) and the like. That is, the memory in the embodiments of the disclosure is intended to include, but not limited to, these and any other suitable types of memory.

The embodiments of the disclosure further provides a computer-readable storage medium configured for storing a computer program.

Optionally, the computer-readable storage medium may be applied to the network device in the embodiments of the disclosure, and the computer program causes a computer to execute the corresponding process flows implemented by the network device in the various methods of the embodiments of the disclosure. For the sake of brevity, description thereof is not repeated herein.

Optionally, the computer-readable storage medium may be applied to the mobile terminal/terminal in the embodiments of the disclosure, and the computer program causes a computer to execute the corresponding process flows implemented by the mobile terminal/terminal in the various methods of the embodiments of the disclosure. For the sake of brevity, description thereof is not repeated herein.

The embodiments of the disclosure further provides a computer program product including a computer program instruction.

Optionally, the computer program product may be applied to the network device in the embodiments of the disclosure, and the computer program instruction causes the computer to execute the corresponding process flows implemented by the network device in the various methods of the embodiments of the disclosure. For the sake of brevity, description thereof is not repeated herein.

Optionally, the computer program product may be applied to the mobile terminal/terminal in the embodiments of the disclosure, and the computer program instruction causes a computer to execute the corresponding process flows implemented by the mobile terminal/terminal in the various methods of the embodiments of the disclosure. For the sake of brevity, description thereof is not repeated herein.

The embodiments of the disclosure further provides a computer program.

Optionally, the computer program may be applied to the network device in the embodiments of the disclosure, and when running on a computer, the computer program causes the computer to execute the corresponding process flows implemented by the network device in the various methods of the embodiments of the disclosure. For the sake of brevity, description thereof is not repeated herein.

Optionally, the computer program may be applied to the mobile terminal/terminal in the embodiments of the disclosure, and when running on a computer, the computer program causes the computer to execute the corresponding process flows implemented by the mobile terminal/terminal in the various methods of the embodiments of the disclosure. For the sake of brevity, description thereof is not repeated herein.

A person having ordinary skill in the art may be aware that in combination with the disclosed embodiments, the described exemplary units and algorithm steps may be implemented by electronic hardware or a combination of computer software and electronic hardware. Whether these functions are executed by hardware or software depends on the specific application and design constraint conditions of the technical solution. Professionals and technicians can use different methods for each specific application to implement the described functions, but such implementation should not be considered beyond the scope of the disclosure.

A person having ordinary skill in the art may clearly understand that, for the convenience and brevity of description, the specific working process of the abovementioned system, device, and unit may refer to the corresponding processes in the foregoing method embodiments, which is not repeated herein.

In the several embodiments provided in the disclosure, it should be understood that the disclosed system, device, and method may be implemented in other ways. For instance, the device embodiments described above are only illustrative. For instance, the division of the unit is only a logical function division, and there may be other division methods in actual implementation. For instance, multiple units or components may be combined or integrated into another system, or some features may be omitted or may not be implemented. In addition, the displayed or discussed mutual coupling or direct coupling or communication connection may be implemented through some interfaces, and the indirect coupling or communication connection of the device or unit may be in electrical, mechanical, or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, in the embodiments of the disclosure, each functional unit may be integrated into one processing unit, or each unit may exist alone physically, or two or more units may be integrated into one unit.

If the function is implemented in the form of a software functional unit and sold or used as an independent product, it may be stored in a computer-readable storage medium. Based on this understanding, regarding the technical solution of the disclosure, the part that contributes to the related art or the part of the technical solution, may be embodied in the form of a software product in essence. The computer software product is stored in a storage medium and includes a number of instructions to enable a computer apparatus (which may be a personal computer, a server, or a network device and the like) to execute all or part of the steps of the method described in the various embodiments of the disclosure. The aforementioned storage medium includes a U disk, a mobile hard disk, a read-only memory (ROM), a random access memory (RAM), a magnetic disk, an optical disk, or other media that may store program codes.

## Claims

1. A data transmission method, comprising:
receiving (401), by a target base station, first indication information from a terminal, wherein the first indication information is configured to indicate a number of packet data to be sent by the terminal and/or whether the packet data to be sent exists; and
sending (402), by the target base station, first configuration information to the terminal, wherein the first configuration information is used by the terminal to determine at least one uplink transmission resource corresponding to at least one of the packet data to be sent,
wherein the step of receiving, by the target base station, the first indication information from the terminal comprises:
receiving, by the target base station, a first preamble from the terminal on a first Physical Random Access Channel, PRACH, resource, wherein the first PRACH resource and/or the first preamble have/has an association relationship with the number of the packet data to be received from the terminal; and
determining, by the target base station, the number of the packet data to be received from the terminal according to the first PRACH resource and/or the first preamble;
wherein the method further comprises:
sending, by the target base station, second configuration information to the terminal, wherein the second configuration information is used by the terminal to determine the association relationship between the number of the packet data to be sent to the target base station and the first PRACH resource and/or the first preamble;
wherein the second configuration information is configured through a system broadcasting message or dedicated signaling.

2. The method according to claim 1, wherein the step of receiving, by the target base station, the first indication information sent by the terminal further comprises:
receiving, by the target base station, a first message sent by the terminal, wherein the first message carries the first indication information;
wherein the first message is MSG3 in a 4-step random access process, or the first message is MSGA in a 2-step random access process.

3. The method according to claim 1, wherein the step of receiving, by the target base station, the first indication information sent by the terminal further comprises:
receiving, by the target base station, uplink data or uplink signaling sent by the terminal, wherein a medium access control (MAC) service data unit (SDU) corresponding to the uplink data or the uplink signaling is multiplexed with a first MAC control element (CE) in a same MAC protocol data unit (PDU), and the first MAC CE carries the first indication information.

4. The method according to claim 1, wherein the step of receiving, by the targe base station, the first indication information sent by the terminal further comprises:
receiving, by the targe base station, uplink data or uplink signaling sent by the terminal, wherein a MAC SDU corresponding to the uplink data or the uplink signaling is multiplexed with a second MAC CE in a same MAC PDU, the second MAC CE carries a buffer status report (BSR), and the BSR indicates that the packet data to be sent exists and/or the number of the packet data to be sent.

5. The method according to claim 1, wherein the step, by the targe base station, of receiving the first indication information sent by the terminal further comprises:
receiving, by the targe base station, a first data packet sent by the terminal, wherein a packet header of the first data packet carries the first indication information;
wherein the packet header is a packet data convergence protocol (PDCP) packet header or a radio link control (RLC) packet header.

6. The method according to claim 1, wherein the step, by the target base station, of receiving the first indication information sent by the terminal comprises:
receiving, by the target base station, a control PDU sent by the terminal, wherein the control PDU carries the first indication information;
wherein the control PDU is a PDCP control PDU or an RLC control PDU.

7. A data transmission method, comprising:
sending (401), by a terminal, first indication information to a target base station, wherein the first indication information is configured to indicate a number of packet data to be sent by the terminal and/or whether the packet data to be sent exists; and
receiving (402), by the terminal, first configuration information from the target base station, wherein the first configuration information is used by the terminal to determine at least one uplink transmission resource corresponding to at least one of the packet data to be sent,
wherein the step of sending, by the terminal, the first indication information to the target base station comprises:
sending, by the terminal, a first preamble to the target base station on a first Physical Random Access Channel, PRACH, resource, wherein the first PRACH resource and/or the first preamble have/has an association relationship with the number of the packet data to be sent by the terminal;
wherein the method further comprises:
receiving, by the terminal, second configuration information from the target base station, wherein the second configuration information is used by the terminal to determine the association relationship between the number of the packet data to be sent and the first PRACH resource and/or the first preamble; and
determining, by the terminal, the first PRACH resource and/or the first preamble based on the second configuration information and the number of the packet data to be sent to the target base station;
wherein the second configuration information is configured through a system broadcasting message or dedicated signaling.

8. The method according to claim 7, wherein the step of sending the first indication information to the target base station by the terminal further comprises:
sending, by the terminal, a first message to the target base station, wherein the first message carries the first indication information;
wherein the first message is MSG3 in a 4-step random access process, or the first message is MSGA in a 2-step random access process.

9. The method according to claim 7, wherein the step of sending, by the terminal, the first indication information to the target base station further comprises:
sending, by the terminal, uplink data or uplink signaling to the target base station, wherein a medium access control (MAC) service data unit (SDU) corresponding to the uplink data or the uplink signaling is multiplexed with a first MAC control element (CE) in a same MAC protocol data unit (PDU), and the first MAC CE carries the first indication information.

10. The method according to claim 7, wherein the step of sending, by the terminal, the first indication information to the target base station further comprises:
sending, by the terminal, uplink data or uplink signaling to the target base station, wherein a MAC SDU corresponding to the uplink data or the uplink signaling is multiplexed with a second MAC CE in a same MAC PDU, the second MAC CE carries a buffer status report (BSR), and the BSR indicates that the packet data to be sent exists and/or the number of the packet data to be sent.

11. The method according to claim 8, wherein the step of sending, by the terminal, the first indication information to the target base station further comprises:
sending, by the terminal, a first data packet to the target base station, wherein a packet header of the first data packet carries the first indication information;
wherein the packet header is a packet data convergence protocol (PDCP) packet header or a radio link control (RLC) packet header.

12. The method according to claim 8, wherein the step of sending, by the terminal, the first indication information to the target base station further comprises:
sending, by the terminal, a control PDU to the target base station, wherein the control PDU carries the first indication information;
wherein the control PDU is a PDCP control PDU or an RLC control PDU.

13. A base station apparatus, comprising:
a receiving circuit (601), configured to receive first indication information from a terminal, wherein the first indication information is configured to indicate a number of packet data to be received from the terminal and/or whether the packet data to be sent exists; and
a sending circuit (602), configured to send first configuration information to the terminal, wherein the first configuration information is used by the terminal to determine at least one uplink transmission resource corresponding to at least one of the packet data to be sent,
wherein the receiving circuit (601) performs:
receiving a first preamble from the terminal on a first Physical Random Access Channel, PRACH, resource, wherein the first PRACH resource and/or the first preamble have/has an association relationship with the number of the packet data to be sent by the terminal; and
determining the number of the packet data to be received from the terminal according to the first PRACH resource and/or the first preamble;
wherein the sending circuit (602) further performs:
sending second configuration information to the terminal, wherein the second configuration information is used by the terminal to determine the association relationship between the number of the packet data to be sent to the target base station and the first PRACH resource and/or the first preamble;
wherein the second configuration information is configured through a system broadcasting message or dedicated signaling.

## Patentansprüche

1. Datenübertragungsverfahren, umfassend:
Empfangen (401), durch eine Ziel-Basisstation, einer ersten Anzeigeinformation von einem Endgerät, wobei die erste Anzeigeinformation dafür ausgelegt ist, eine Anzahl von durch das Endgerät zu sendenden Paketdaten anzuzeigen und/oder anzuzeigen, ob die zu sendenden Paketdaten existieren; und
Senden (402), durch die Ziel-Basisstation, einer ersten Konfigurationsinformation an das Endgerät, wobei die erste Konfigurationsinformation durch das Endgerät verwendet wird, um mindestens eine Uplink-Übertragungsressource zu bestimmen, die mindestens einem der zu sendenden Paketdaten entspricht,
wobei der Schritt des Empfangens, durch die Ziel-Basisstation, der ersten Anzeigeinformation vom Endgerät Folgendes umfasst:
Empfangen, durch die Ziel-Basisstation, einer ersten Präambel vom Endgerät auf einer ersten PRACH(Physical Random Access Channel, physikalischer Direktzugriffskanal)-Ressource, wobei die erste PRACH-Ressource und/oder die erste Präambel eine Assoziationsbeziehung mit der Anzahl der vom Endgerät zu empfangenden Paketdaten hat/haben; und
Bestimmen, durch die Ziel-Basisstation, der Anzahl der vom Endgerät zu empfangenden Paketdaten gemäß der ersten PRACH-Ressource und/oder der ersten Präambel;
wobei das Verfahren ferner Folgendes umfasst:
Senden, durch die Ziel-Basisstation, einer zweiten Anzeigeinformation an das Endgerät, wobei die zweite Konfigurationsinformation durch das Endgerät verwendet wird, um die Assoziationsbeziehung zwischen der Anzahl der an die Ziel-Basisstation zu sendenden Paketdaten und der ersten PRACH-Ressource und/oder der ersten Präambel zu bestimmen;
wobei die zweite Konfigurationsinformation durch eine System-Rundrufnachricht oder dedizierte Signalisierung konfiguriert wird.

2. Verfahren gemäß Anspruch 1, wobei der Schritt des Empfangens, durch die Ziel-Basisstation, der ersten durch das Endgerät gesendeten Anzeigeinformation ferner Folgendes umfasst:
Empfangen, durch die Ziel-Basisstation, einer ersten durch das Endgerät gesendeten Nachricht, wobei die erste Nachricht die erste Anzeigeinformation enthält;
wobei die erste Nachricht MSG3 in einem 4-schrittigen Direktzugriffsverfahren ist oder die erste Nachricht MSGA in einem 2-schrittigen Direktzugriffsverfahren ist.

3. Verfahren gemäß Anspruch 1, wobei der Schritt des Empfangens, durch die Ziel-Basisstation, der ersten durch das Endgerät gesendeten Anzeigeinformation ferner Folgendes umfasst:
Empfangen, durch die Ziel-Basisstation, der durch das Endgerät gesendeten Uplink-Daten oder Uplink-Signalisierung, wobei eine MAC(Media Access Control, Medienzugriffssteuerung)-Dienstdateneinheit (SDU, Service Data Unit), die den Uplink-Daten oder der Uplink-Signalisierung entspricht, mit einem ersten MAC-Steuerelement (CE, Control Element) in einer gleichen MAC-Protokolldateneinheit (PDU, Protocol Data Unit) gemultiplext wird und das erste MAC-CE die erste Anzeigeinformation enthält.

4. Verfahren gemäß Anspruch 1, wobei der Schritt des Empfangens, durch die Ziel-Basisstation, der ersten durch das Endgerät gesendeten Anzeigeinformation ferner Folgendes umfasst:
Empfangen, durch die Ziel-Basisstation, der durch das Endgerät gesendeten Uplink-Daten oder Uplink-Signalisierung, wobei eine MAC-SDU, die den Uplink-Daten oder der Uplink-Signalisierung entspricht, mit einem zweiten MAC-CE in einer gleichen MAC-PDU gemultiplext wird, das zweite MAC-CE einen Pufferstatusbericht (BSR, Buffer Status Report) enthält und der BSR anzeigt, dass die zu sendenden Paketdaten existieren, und/oder die Anzahl der zu sendenden Paketdaten anzeigt.

5. Verfahren gemäß Anspruch 1, wobei der Schritt des Empfangens, durch die Ziel-Basisstation, der ersten durch das Endgerät gesendeten Anzeigeinformation ferner Folgendes umfasst:
Empfangen, durch die Ziel-Basisstation, eines ersten durch das Endgerät gesendeten Datenpakets, wobei ein Paketkopf des ersten Datenpakets die erste Anzeigeinformation enthält;
wobei der Paketkopf ein PDCP(Packet Data Convergence Protocol, Paketdatenkonvergenzprotokoll)-Paketkopf oder ein RLC(Radio Link Control, Funkverbindungssteuerung)-Paketkopf ist.

6. Verfahren gemäß Anspruch 1, wobei der Schritt des Empfangens, durch die Ziel-Basisstation, der ersten durch das Endgerät gesendeten Anzeigeinformation Folgendes umfasst:
Empfangen, durch die Ziel-Basisstation, einer durch das Endgerät gesendeten Steuer-PDU, wobei die Steuer-PDU die erste Anzeigeinformation enthält;
wobei die Steuer-PDU eine PDCP-Steuer-PDU oder eine RLC-Steuer-PDU ist.

7. Datenübertragungsverfahren, umfassend:
Senden (401), durch ein Endgerät, einer ersten Anzeigeinformation an eine Ziel-Basisstation, wobei die erste Anzeigeinformation dafür ausgelegt ist, eine Anzahl von durch das Endgerät zu sendenden Paketdaten anzuzeigen und/oder anzuzeigen, ob die zu sendenden Paketdaten existieren; und
Empfangen (402), durch das Endgerät, einer ersten Konfigurationsinformation von der Ziel-Basisstation, wobei die erste Konfigurationsinformation durch das Endgerät verwendet wird, um mindestens eine Uplink-Übertragungsressource zu bestimmen, die mindestens einem der zu sendenden Paketdaten entspricht,
wobei der Schritt des Sendens, durch das Endgerät, der ersten Anzeigeinformation an die Ziel-Basisstation Folgendes umfasst:
Senden, durch das Endgerät, einer ersten Präambel an die Ziel-Basisstation auf einer ersten PRACH(Physical Random Access Channel, physikalischer Direktzugriffskanal)-Ressource, wobei die erste PRACH-Ressource und/oder die erste Präambel eine Assoziationsbeziehung mit der Anzahl der durch das Endgerät zu sendenden Paketdaten hat/haben; und
wobei das Verfahren ferner Folgendes umfasst:
Empfangen, durch das Endgerät, einer zweiten Konfigurationsinformation von der Ziel-Basisstation,
wobei die zweite Konfigurationsinformation durch das Endgerät verwendet wird, um die Assoziationsbeziehung zwischen der Anzahl der zu sendenden Paketdaten und der ersten PRACH-Ressource und/oder der ersten Präambel zu bestimmen; und
Bestimmen, durch das Endgerät, der ersten PRACH-Ressource und/oder der ersten Präambel basierend auf der zweiten Konfigurationsinformation und der Anzahl der an die Ziel-Basisstation zu sendenden Paketdaten;
wobei die zweite Konfigurationsinformation durch eine System-Rundrufnachricht oder dedizierte Signalisierung konfiguriert wird.

8. Verfahren gemäß Anspruch 7, wobei der Schritt des Sendens der ersten Anzeigeinformation an die Ziel-Basisstation durch das Endgerät ferner Folgendes umfasst:
Senden, durch das Endgerät, einer ersten Nachricht an die Ziel-Basisstation, wobei die erste Nachricht die erste Anzeigeinformation enthält;
wobei die erste Nachricht MSG3 in einem 4-schrittigen Direktzugriffsverfahren ist oder die erste Nachricht MSGA in einem 2-schrittigen Direktzugriffsverfahren ist.

9. Verfahren gemäß Anspruch 7, wobei der Schritt des Sendens, durch das Endgerät, der ersten Anzeigeinformation an die Ziel-Basisstation ferner Folgendes umfasst:
Senden, durch das Endgerät, von Uplink-Daten oder Uplink-Signalisierung an die Ziel-Basisstation, wobei eine MAC(Media Access Control, Medienzugriffssteuerung)-Dienstdateneinheit (SDU, Service Data Unit), die den Uplink-Daten oder der Uplink-Signalisierung entspricht, mit einem ersten MAC-Steuerelement (CE, Control Element) in einer gleichen MAC-Protokolldateneinheit (PDU, Protocol Data Unit) gemultiplext wird und das erste MAC-CE die erste Anzeigeinformation enthält.

10. Verfahren gemäß Anspruch 7, wobei der Schritt des Sendens, durch das Endgerät, der ersten Anzeigeinformation an die Ziel-Basisstation ferner Folgendes umfasst:
Senden, durch das Endgerät, von Uplink-Daten oder Uplink-Signalisierung an die Ziel-Basisstation, wobei eine MAC-SDU, die den Uplink-Daten oder der Uplink-Signalisierung entspricht, mit einem zweiten MAC-CE in einer gleichen MAC-PDU gemultiplext wird, das zweite MAC-CE einen Pufferstatusbericht (BSR, Buffer Status Report) enthält und der BSR anzeigt, dass die zu sendenden Paketdaten existieren, und/oder die Anzahl der zu sendenden Paketdaten anzeigt.

11. Verfahren gemäß Anspruch 8, wobei der Schritt des Sendens, durch das Endgerät, der ersten Anzeigeinformation an die Ziel-Basisstation ferner Folgendes umfasst:
Senden, durch das Endgerät, eines ersten Datenpakets an die Ziel-Basisstation, wobei ein Paketkopf des ersten Datenpakets die erste Anzeigeinformation enthält;
wobei der Paketkopf ein PDCP(Packet Data Convergence Protocol, Paketdatenkonvergenzprotokoll)-Paketkopf oder ein RLC(Radio Link Control, Funkverbindungssteuerung)-Paketkopf ist.

12. Verfahren gemäß Anspruch 8, wobei der Schritt des Sendens, durch das Endgerät, der ersten Anzeigeinformation an die Ziel-Basisstation ferner Folgendes umfasst:
Senden, durch das Endgerät, einer Steuer-PDU an die Ziel-Basisstation, wobei die Steuer-PDU die erste Anzeigeinformation enthält;
wobei die Steuer-PDU eine PDCP-Steuer-PDU oder eine RLC-Steuer-PDU ist.

13. Basisstationseinrichtung, umfassend:
eine Empfangsschaltung (601), die dafür ausgelegt ist, eine erste Anzeigeinformation von einem Endgerät zu empfangen, wobei die erste Anzeigeinformation dafür ausgelegt ist, eine Anzahl von zu empfangenden Paketdaten vom Endgerät anzuzeigen und/oder anzuzeigen, ob die zu sendenden Paketdaten existieren; und
eine Sendeschaltung (602), die dafür ausgelegt ist, die erste Konfigurationsinformation an das Endgerät zu senden, wobei die erste Konfigurationsinformation durch das Endgerät verwendet wird, um mindestens eine Uplink-Übertragungsressource zu bestimmen, die mindestens einem der zu sendenden Paketdaten entspricht,
wobei die Empfangsschaltung (601) Folgendes durchführt:
Empfangen einer ersten Präambel vom Endgerät auf einer ersten PRACH(Physical Random Access Channel,
physikalischer Direktzugriffskanal)-Ressource, wobei die erste PRACH-Ressource und/oder die erste Präambel eine Assoziationsbeziehung mit der Anzahl der durch das Endgerät zu sendenden Paketdaten hat/haben; und
Bestimmen der Anzahl der vom Endgerät zu empfangenden Datenpakete gemäß der ersten PRACH-Ressource und/oder der ersten Präambel;
wobei die Sendeschaltung (602) ferner folgendes durchführt:
Senden einer zweiten Konfigurationsinformation an das Endgerät, wobei die zweite Konfigurationsinformation durch das Endgerät verwendet wird, um die Assoziationsbeziehung zwischen der Anzahl der an die Ziel-Basisstation zu sendenden Paketdaten und der ersten PRACH-Ressource und/oder der ersten Präambel zu bestimmen;
wobei die zweite Konfigurationsinformation durch eine System-Rundrufnachricht oder dedizierte Signalisierung konfiguriert wird.

## Revendications

1. Procédé de transmission de données, comportant :
la réception (401), par une station de base de destination, de premières informations d'indication en provenance d'un terminal, les premières informations d'indication étant configurées pour indiquer un nombre de données par paquets à émettre par le terminal et/ou si les données par paquets à émettre existent ; et
l'envoi (402), par la station de base de destination, de premières informations de configuration au terminal, les premières informations de configuration étant utilisées par le terminal pour déterminer au moins une ressource de transmission de liaison montante correspondant à au moins une des données par paquets à émettre,
l'étape de réception, par la station de base de destination, des premières informations d'indication en provenance du terminal comportant :
la réception, par la station de base de destination, d'un premier préambule en provenance du terminal sur une première ressource de canal physique d'accès aléatoire, PRACH, la première ressource de PRACH et/ou le premier préambule présentant une relation d'association avec le nombre des données par paquets à recevoir en provenance du terminal ; et
la détermination, par la station de base de destination, du nombre des données par paquets à recevoir en provenance du terminal d'après la première ressource de PRACH et/ou le premier préambule ;
le procédé comportant en outre :
l'envoi, par la station de base de destination, de secondes informations de configuration au terminal, les secondes informations de configuration étant utilisées par le terminal pour déterminer la relation d'association entre le nombre des données par paquets à envoyer à la station de base de destination et la première ressource de PRACH et/ou le premier préambule ;
les secondes informations de configuration étant configurées par l'intermédiaire d'un message de diffusion de système ou d'une signalisation dédiée.

2. Procédé selon la revendication 1, l'étape de réception, par la station de base de destination, des premières informations d'indication émises par le terminal comportant en outre :
la réception, par la station de base de destination, d'un premier message émis par le terminal, le premier message transportant les premières informations d'indication ;
le premier message étant MSG3 dans un processus d'accès aléatoire en 4 étapes, ou le premier message étant MSGA dans un processus d'accès aléatoire en 2 étapes.

3. Procédé selon la revendication 1, l'étape de réception, par la station de base de destination, des premières informations d'indication émises par le terminal comportant en outre :
la réception, par la station de base de destination, de données de liaison montante ou d'une signalisation de liaison montante émises par le terminal, une unité de données de service (SDU) de commande d'accès au support (MAC) qui correspond aux données de liaison montante ou à la signalisation de liaison montante étant multiplexée avec un premier élément de commande (CE) de MAC dans une même unité de données de protocole (PDU) de MAC, et le premier CE de MAC transportant les premières informations d'indication.

4. Procédé selon la revendication 1, l'étape de réception, par la station de base de destination, des premières informations d'indication émises par le terminal comportant en outre :
la réception, par la station de base de destination, de données de liaison montante ou d'une signalisation de liaison montante émises par le terminal, une SDU de MAC qui correspond aux données de liaison montante ou à la signalisation de liaison montante étant multiplexée avec un second CE de MAC dans une même PDU de MAC, le second CE de MAC transportant un compte rendu d'état de tampon (BSR), et le BSR indiquant que les données par paquets à émettre existent et/ou le nombre des données par paquets à émettre.

5. Procédé selon la revendication 1, l'étape de réception, par la station de base de destination, des premières informations d'indication émises par le terminal comportant en outre :
la réception, par la station de base de destination, d'un premier paquet de données émis par le terminal, un en-tête de paquet du premier paquet de données transportant les premières informations d'indication ;
l'en-tête de paquet étant un en-tête de paquet de protocole de convergence de données par paquets (PDCP) ou un en-tête de paquet de commande de liaison radioélectrique (RLC).

6. Procédé selon la revendication 1, l'étape de réception, par la station de base de destination, des premières informations d'indication émises par le terminal comportant :
la réception, par la station de base de destination, d'une PDU de commande émise par le terminal, la PDU de commande transportant les premières informations d'indication ;
la PDU de commande étant une PDU de commande de PDCP ou une PDU de commande de RLC.

7. Procédé de transmission de données, comportant :
l'envoi (401), par un terminal, de premières informations d'indication à une station de base de destination, les premières informations d'indication étant configurées pour indiquer un nombre de données par paquets à émettre par le terminal et/ou si les données par paquets à émettre existent ; et
la réception (402), par le terminal, de premières informations de configuration en provenance de la station de base de destination, les premières informations de configuration étant utilisées par le terminal pour déterminer au moins une ressource de transmission de liaison montante correspondant à au moins une des données par paquets à émettre,
l'étape d'envoi, par le terminal, des premières informations d'indication à la station de base de destination comportant :
l'envoi, par le terminal, d'un premier préambule à la station de base de destination sur une première ressource de canal physique d'accès aléatoire, PRACH,
la première ressource de PRACH et/ou le premier préambule présentant une relation d'association avec le nombre des données par paquets à émettre par le terminal ;
le procédé comportant en outre :
la réception, par le terminal, de secondes informations de configuration en provenance de la station de base de destination, les secondes informations de configuration étant utilisées par le terminal pour déterminer la relation d'association entre le nombre des données par paquets à émettre et la première ressource de PRACH et/ou le premier préambule ; et
la détermination, par le terminal, de la première ressource de PRACH et/ou du premier préambule d'après les secondes informations de configuration et le nombre des données par paquets à envoyer à la station de base de destination :
les secondes informations de configuration étant configurées par l'intermédiaire d'un message de diffusion de système ou d'une signalisation dédiée.

8. Procédé selon la revendication 7, l'étape d'envoi des premières informations d'indication à la station de base de destination par le terminal comportant en outre :
l'envoi, par le terminal, d'un premier message à la station de base de destination, le premier message transportant les premières informations d'indication ;
le premier message étant MSG3 dans un processus d'accès aléatoire en 4 étapes, ou le premier message étant MSGA dans un processus d'accès aléatoire en 2 étapes.

9. Procédé selon la revendication 7, l'étape d'envoi, par le terminal, des premières informations d'indication à la station de base de destination comportant en outre :
l'envoi, par le terminal, de données de liaison montante ou d'une signalisation de liaison montante à la station de base de destination, une unité de données de service (SDU) de commande d'accès au support (MAC) qui correspond aux données de liaison montante ou à la signalisation de liaison montante étant multiplexée avec un premier élément de commande (CE) de MAC dans une même unité de données de protocole (PDU) de MAC, et le premier CE de MAC transportant les premières informations d'indication.

10. Procédé selon la revendication 7, l'étape d'envoi, par le terminal, des premières informations d'indication à la station de base de destination comportant en outre :
l'envoi, par le terminal, de données de liaison montante ou d'une signalisation de liaison montante à la station de base de destination, une SDU de MAC qui correspond aux données de liaison montante ou à la signalisation de liaison montante étant multiplexée avec un second CE de MAC dans une même PDU de MAC, le second CE de MAC transportant un compte rendu d'état de tampon (BSR), et le BSR indiquant que les données par paquets à émettre existent et/ou le nombre des données par paquets à émettre.

11. Procédé selon la revendication 8, l'étape d'envoi, par le terminal, des premières informations d'indication à la station de base de destination comportant en outre :
l'envoi, par le terminal, d'un premier paquet de données à la station de base de destination, un en-tête de paquet du premier paquet de données transportant les premières informations d'indication ;
l'en-tête de paquet étant un en-tête de paquet de protocole de convergence de données par paquets (PDCP) ou un en-tête de paquet de commande de liaison radioélectrique (RLC).

12. Procédé selon la revendication 8, l'étape d'envoi, par le terminal, des premières informations d'indication à la station de base de destination comportant en outre :
l'envoi, par le terminal, d'une PDU de commande à la station de base de destination, la PDU de commande transportant les premières informations d'indication ;
la PDU de commande étant une PDU de commande de PDCP ou une PDU de commande de RLC.

13. Appareil de station de base, comportant :
un circuit (601) de réception, configuré pour recevoir des premières informations d'indication en provenance d'un terminal, les premières informations d'indication étant configurées pour indiquer un nombre de données par paquets à recevoir en provenance du terminal et/ou si les données par paquets à émettre existent ; et
un circuit (602) d'émission, configuré pour envoyer des premières informations de configuration au terminal, les premières informations de configuration étant utilisées par le terminal pour déterminer au moins une ressource de transmission de liaison montante correspondant à au moins une des données par paquets à émettre,
le circuit (601) de réception effectuant :
la réception d'un premier préambule en provenance du terminal sur une première ressource de canal physique d'accès aléatoire, PRACH, la première ressource de PRACH et/ou le premier préambule présentant une relation d'association avec le nombre des données par paquets à émettre par le terminal ; et
la détermination du nombre des données par paquets à recevoir en provenance du terminal d'après la première ressource de PRACH et/ou le premier préambule ;
le circuit (602) d'émission effectuant en outre :
l'envoi de secondes informations de configuration au terminal, les secondes informations de configuration étant utilisées par le terminal pour déterminer la relation d'association entre le nombre des données par paquets à envoyer à la station de base de destination et la première ressource de PRACH et/ou le premier préambule ;
les secondes informations de configuration étant configurées par l'intermédiaire d'un message de diffusion de système ou d'une signalisation dédiée.
